# EUROPÄISCHE PATENTSCHRIFT

(11) **EP 1 450 330 B1**
(45) Veröffentlichungstag und Bekanntmachung des Hinweises auf die Patenterteilung: **08.03.2006**
(21) Anmeldenummer: 04006254.9
(22) Anmeldetag: 23.04.2002
(51) Int. Cl.: G08G 1/16, B60Q 1/52, B60R 1/12

(54) **Warneinrichtung in Kraftfahrzeugen**
Alarm device for vehicles
Dispositif d'alarme pour véhicules

(30) Priorität: 23.04.2001 DE 20106977 U
(43) Veröffentlichungstag der Anmeldung: 25.08.2004
(62) Teilanmeldung aus: 02009023.9
(73) Patentinhaber: MEKRA Lang GmbH & Co. KG, 90765 Fürth (DE)
(72) Erfinder: Lang, Heinrich, 91465 Ergersheim (DE); Witzke, Michael, 91522 Ansbach (DE)
(74) Vertreter: Winter, Brandl, Fürniss, Hübner Röss, Kaiser, Polte Partnerschaft Patent- und Rechtsanwaltskanzlei

(56) Entgegenhaltungen:
- WO-A-98/34131
- GB-A- 2 350 741
- US-A- 4 694 295
- US-A- 5 786 772
- US-A- 5 983 161

## Beschreibung

Die Erfindung betrifft eine Warneinrichtung in Kraftfahrzeugen gemäß dem Oberbegriff des Anspruchs 1.

In letzter Zeit werden Kraftfahrzeuge mit einer Vielzahl von Warn- und Überwachungseinrichtungen ausgestattet. Beispielsweise ist aus der EP 1 068 992 A2 eine Rückfahrhilfe für Kraftfahrzeuge bekannt, durch die Lage und Größe eines Hindernisses hinter dem Fahrzeug erfaßt und dem Fahrer angezeigt wird. Die hierfür verwendeten Sensoren basieren auf Ultraschall, Infrarot, Radar oder allgemein mittels elektromagnetischer Strahlung. Bei Lastkraftwagen werden derartige Sensoren nicht nur auf der Rückseite des Fahrzeugs, sondern auch seitlich an dem Fahrzeug und auf der Frontseite des Fahrzeugs angebracht, um so die durch den Fahrer nicht unmittelbar einsehbaren Bereiche vor, hinter und seitlich dem Fahrzeug zu überwachen und ein Warnsignal zu erzeugen, falls ein Hindernis in diesen Bereichen auftaucht. Üblicherweise wird ein akustisches Warnsignal erzeugt und somit dem Fahrer signalisiert, daß vor, hinter und/oder seitlich seines Fahrzeugs ein Hindernis vorliegt. Der Fahrer muß nun seine verschiedenen Anzeigeeinrichtungen in Form der Außenspiegel und/oder einem Monitor zu einer Rückfahrkamera überprüfen, um festzustellen, wo sich das signalisierte Hindernis befindet. Hierdurch geht wertvolle Zeit verloren, währenddessen es bereits zu einem Unfall kommen kann. Zusätzlich besteht die Gefahr, daß der Fahrer überhaupt nicht erkennt, wo sich das signalisierte Hindernis befindet.

Aus der DE-PS 199 21 449 C1 ist eine Leithilfe bei einem Fahrspurwechsels eines Fahrzeugs bekannt. Hierbei werden Fahrzeuge in einem Totwinkelbereich erfaßt und gegebenenfalls ein Warnsignal erzeugt, um einen Spurwechsel zu verhindern. Die Lage eines im Totwinkelbereich erfassten Hindernisses ist inhärent bekannt, da eben nur Hindernisse im Totwinkelbereich erfaßt werden. Die Vorrichtung nach der DE-PS 199 21 449 C1 gibt keinerlei Hinweise auf die Lage des erfaßten Hindernisses, dieses Wissen um die Lage muß bereits beim Fahrer vorliegen. Hindernisse in beliebiger Lage relativ zu dem Fahrzeug können nicht erfaßt werden.

Es ist daher Aufgabe der vorliegenden Erfindung, die vorstehend geschilderten Warneinrichtungen für Kraftfahrzeuge dahingehend zu verbessern, daß die Lage und Position des signalisierten Hindernisses für den Fahrer leichter erkennbar wird.

Die Lösung dieser Aufgabe erfolgt durch die Merkmale des Anspruchs 1.

Wird durch einen oder mehrere der Mehrzahl von Sensoren, die an einem seitlichen, hinteren und/oder vorderen Bereich des Kraftfahrzeuges angeordnet sind, ein Hindernis erfaßt, erzeugt die den Sensoren zugeordnete Steuereinrichtung ein Hinweissignal für den Fahrer, daß auf einen bestimmten Spiegel aus der Mehrzahl der Anzeigeeinrichtungen hinweist. Das Hinweissignal zeigt die Lage des erfaßten Hindernisses relativ zum Fahrzeug und den Sipegel z. B. den linken Außenspiegel, an, in dem das erfaßte Hindernis zu erkennen ist. Durch einen Blick auf diese Anzeigeeinrichtung, z. B. den linken Außenspiegel, kann der Fahrer das durch einen der Sensoren erfaßte Hindernis sehen. Der Fahrer erhält somit nicht nur ein unbestimmtes akustisches Signal das auf das vorliegen eines Hindernisses wo auch immer hinweist, wie dies beim Stand der Technik der Fall ist, sondern durch das erfindungsgemäße Hinweissignal, das optischer und/oder akustischer Art sein kann, wird er auch über die Lage des erfaßten Hindernisses informiert und er kann somit schneller und gezielter reagieren. Zusätzlich führt dies auch zur Vermeidung von Streßsituationen für den Fahrer, da er wesentlich schneller bzw. sofort weiß, wo sich das erfaßte Hindernis befindet.

Bei den Anzeigeeinrichtungen gemäß der vorliegenden Erfindung handelt es sich in erster Linie um die Außenspiegel an dem Kraftfahrzeug, die bei Lastkraftwagen oder größeren Nutzfahrzeugen in der Regel einen Hauptspiegel und mindestens einen Zusatzspiegel in Form eines Weitwinkelspiegels enthalten. Mit den Weitwinkelspiegeln lassen sich Hindernisse seitlich und auch vor dem Fahrzeug erkennen, die mit dem Hauptspiegel oder direkt nicht einsehbar sind, da sie im "toten Winkel" liegen. Zusätzlich umfassen die Anzeigeeinrichtungen gemäß der vorliegenden Erfindung auch Monitore von Überwachungskameras, insbesondere für den rückwärtigen Bereich eines Fahrzeugs, und/oder LED- und/oder LCD-Anzeigeelemente (Anspruch 2).

Gemäß einer vorteilhaften Ausgestaltung der Erfindung nach Anspruch 3 ist ein Mittel zur optischen Anzeige des durch die Steuereinrichtung erzeugbaren Hinweissignals vorgesehen. Hierbei sind vorzugsweise (Anspruch 4) eine Mehrzahl von Anzeigemitteln vorgesehen, die jeweils derjenigen Anzeigeeinrichtung räumlich zugeordnet sind, in der das durch den jeweiligen Sensor erfaßte Hindernis sichtbar ist. Wird beispielsweise durch einen Sensor auf der linken Seite des Fahrzeugs ein Hindernis erfaßt, erscheint im Weitwinkelspiegel auf der linken Fahrerseite ein Blinksignal (Anspruch 6) und weist den Fahrer darauf hin, daß in diesem Spiegel, d.h. in dieser Anzeigeeinrichtung, das durch den Sensor erfaßte Hindernis sichtbar ist.

Gemäß einer vorteilhaften Ausgestaltung der Erfindung nach Anspruch 5 zeigt das optische Anzeigemittel die Lage des erfaßten Hindernisses relativ zum Fahrzeug z. B. durch Richtungspfeile an.

Gemäß einer weiteren vorteilhaften Ausgestaltung der Erfindung kann anstelle des Blinksignals oder zusätzlich zu dem Blinksignal ein Hinweistext angezeigt werden, der ebenfalls auf die Lage des durch den jeweiligen Sensor erfaßten Hindernisses hinweist (Anspruch 7).

Gemäß einer weiteren vorteilhaften Ausgestaltung der Erfindung nach Anspruch 8 ist ein akustisches Anzeigemittel zur Ausgabe eines akustischen Warnsignals bei der Erfassung eines Hindernisses durch die Sensoren vorgesehen. Bei diesem akustischen Anzeigemittel kann es sich um einen Lautsprecher zur Erzeugung und Ausgabe Piep-Signals handeln, wie dies bereits aus dem Stand der Technik bekannt ist. Zusätzlich ist es auch möglich, daß je nach Lage des erfaßten Hindernisses in Bezug zu dem Fahrzeug unterschiedliche Töne bzw. Piep-Signale in unterschiedlicher Höhe oder mit unterschiedlichem Klangmuster erzeugt und ausgegeben werden.

Gemäß einer weiteren vorteilhaften Ausgestaltung der Erfindung nach Anspruch 9 ist eine Sprachausgabeeinrichtung vorgesehen, durch die die Lage eines durch die Sensoren erfaßten Hindernisses in Form von Sprache ausgebbar ist. Durch diese Sprachausgabe kann zum einen darauf hingewiesen werden, daß sich ein Hindernis auf der linken Fahrerseite befindet und zusätzlich kann darauf hingewiesen werden, daß das Hindernis im linken Außenspiegel und zwar im Weitwinkelspiegel zu erkennen ist.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung bevorzugter Ausführungsformen anhand der Zeichnung.

Es zeigt:
Fig. 1 eine schematische Darstellung der Anordnung einer Mehrzahl von Sensoren rund um einen Lastzug;
Fig. 2 eine schematische Darstellung einer ersten Ausführungsform der Erfindung;
Fig. 3 ein Detail aus Fig. 2,
Fig. 4 eine schematische Darstellung einer zweiten Ausführungsform der Erfindung;
Fig. 5 eine schematische Darstellung einer dritten Ausführungsform der Erfindung; und
Fig. 6 eine Darstellung eines optischen Anzeigemittels gemäß einer vierten Ausführungsform der Erfindung.

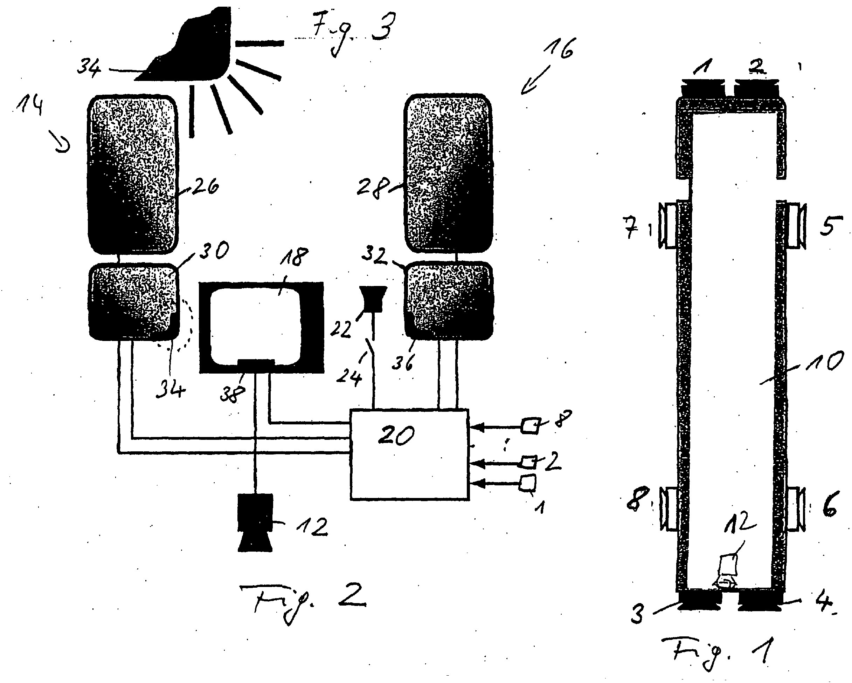

Fig. 1 zeigt schematisch eine beispielhafte Anordnung von Sensoren 1 bis 8 zur Erfassung von Hindernissen an einem Fahrzeug bzw. Lastzug 10. Hierbei sind der erste und zweite Sensor 1 und 2 auf der Vorderseite des Fahrzeugs zur Erfassung von Hindernissen unmittelbar vor dem Fahrzeug, der dritte und vierte Sensor 3 und 4 auf der Rückseite des Fahrzeugs 10 zur Erfassung von Hindernissen hinter dem Fahrzeug, der fünfte und sechste Sensoren 5 und 6 auf der rechten Seite des Fahrzeugs zur Erfassung von Hindernissen rechts von dem Lastzug 10 und der siebte und achte Sensor 7 und 8 auf der linken Seite des Fahrzeugs 10 zur Erfassung von Hindernissen auf der linken Fahrzeugseite angeordnet. Zusätzlich ist noch eine Rückfahrkamera 12 vorgesehen, mittels der insbesondere bei Rückwärtsfahrten der rückwärtige Bereich hinter dem Lastzug 10 unmittelbar überwacht werden kann.

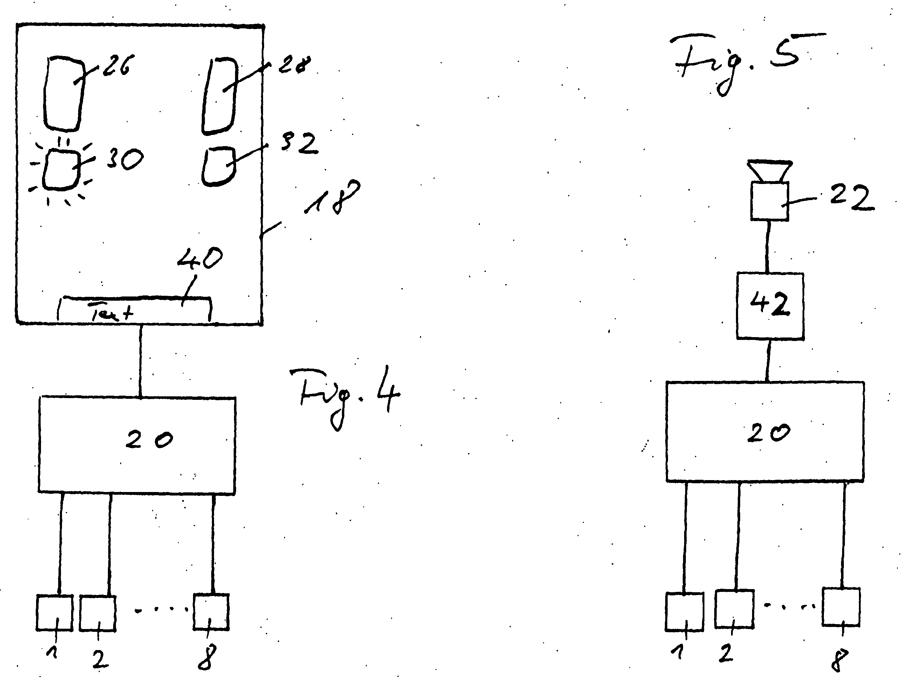

Fig. 2 zeigt schematisch eine erste Ausführungsform der Erfindung mit einer Mehrzahl von Anzeigeeinrichtungen in Form einer linken Außenspiegelanordnung 14, einer rechten Außenspiegelanordnung 16 sowie einem Monitor 18. Die linke und rechte Außenspiegelanordnung 14 bzw. 16 und der Monitor 18 sind mit einer Steuereinrichtung 20 verbunden. Die Steuereinrichtung 20 wiederum ist mit den Sensoren 1 bis 8 verbunden. Die Steuereinheit 20 ist zusätzlich noch mit einem Lautsprecher 22 zur Ausgabe eines akustischen Warnsignals verbunden. Der Lautsprecher 22 läßt sich über einen Schalter 24 deaktivieren. Die linke bzw. rechte Außenspiegelanordnung 14 bzw. 16 weist jeweils einen linken Hauptspiegel 26 bzw. einen rechten Hauptspiegel 28 sowie einen linken Weitwinkelspiegel 30 bzw. einen rechten Weitwinkelspiegel 32 auf.

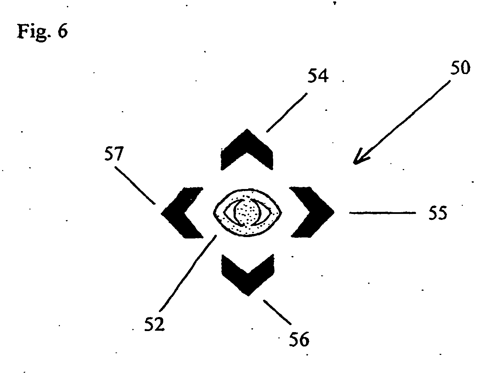

In der rechten unteren Ecke des linken Weitwinkelspiegels 30 ist ein erstes LED-Element 34 vorgesehen, das zur optischen Anzeige des durch die Steuereinrichtung 20 erzeugten Hinweissignals dient, falls die Sensoren 7 oder 8 ein Hindernis auf der linken Seite des Fahrzeugs erfassen. Hierbei blinkt das erste LED-Element 34, wie dies in Fig. 3 dargestellt ist, falls die Sensoren 7 und 8 ein Hindernis erfassen. In analoger Weise ist in der linken unteren Ecke des rechten Weitwinkelspiegels 32 ein zweites LED-Element 36 vorgesehen, das blinkt, wenn die Sensoren 5 und 6 auf der rechten Seite des Fahrzeugs 10 ein Hinternis erfassen. Ein drittes LED-Element 38 ist im Bereich der Unterkante des Monitors 18 vorgesehen. Das dritte LED-Element 38 blinkt auf, wenn die Sensoren 3 und 4 auf der Hinterseite des Fahrzeugs 10 ein Hindernis erfassen. Wird durch den ersten Sensor 1 der linken Vorderseite des Fahrzeugs 10 ein Hindernis erfaßt, blinkt das erste LED-Element 34 im linken Weitwinkelspiegel 30. Wird durch den zweiten Sensor 2 auf der rechten Vorderseite des Fahrzeugs 10 ein Hindernis erfaßt, blinkt das zweite LED-Element 36 im rechten Weitwinkelspiegel 32. Zusätzlich wird bei Erfassung eines Hindernisses durch irgendeinen der Sensoren 1 bis 8 ein akustisches Warnsignal über den Lautsprecher 22 erzeugt und ausgegeben.

Durch die räumliche Zuordnung der LED-Elemente 34, 36 und 38 zu der jeweiligen Anzeigeeinrichtung, linker Weitwinkelspiegel 30, rechter Weitwinkelspiegel 32 oder Monitor 18, wird die Aufmerksamkeit des Fahrers durch das jeweils blinkende LED-Element 34, 36 oder 38 auf diejenige Anzeigeeinrichtung gelenkt, in der das erfaßte Hindernis zu sehen sein sollte. Dadurch kann der Fahrer ohne Verzögerung entsprechend reagieren.

Fig. 4 zeigt schematisch eine zweite Ausführungsform der Erfindung, bei der auf dem Monitor 18 die einzelnen Anzeigeeinrichtungen, d. h. die linke und rechte Außenspiegelanordnung 14 und 16 mit Hauptspiegeln 26 und 28 und Weitwinkelspiegeln 30 und 32 stilisiert dargestellt sind. Erfaßt nun z. B. der siebte Sensor 7 ein Hindernis blinkt auf dem Monitor 18 die stilisierte Darstellung des linken Weitwinkelspiegels 30 und dem Fahrer des Fahrzeugs 10 wird damit angegezeigt, daß das erfaßte Hindernis im linken Weitwinkelspiegel 30 der linken Außenspiegelanordnung 14 zu sehen ist. Wird ein Hinderniss durch den dritten oder vierten Sensor auf der Rückseite des Fahrzeugs 10 erfaßt, erlöschen die stilisierten Darstellungen der linken und rechten Außenspiegelanordnung 14 und 16 im Monitor 18 ein Markierungselement 40 am unteren Rand des Monitors 18 leuchtet auf oder blinkt. Damit wird dem Fahrer angezeigt, daß das erfaßte Hindernis auf dem Monitor 18 zu sehen ist.

Zusätzlich oder alternativ kann das. Markierungselement 40 auf dem Monitor 18 als Textausgabebereich ausgelegt seine, in dem schriftlich angezeigt wird, in welcher Lage bezüglich des Fahrzeugs 10 sich das erfaßte Hindernis befindet, z.B. in Form eines kurzen Textes "Hindernis im Bereich der rechten Fahrertür".

Fig. 5 zeigt schematisch eine dritte Ausführungsform der Erfindung bei der das durch die Steuereinrichtung 20 erzeugte Hinweissignal über den Lautsprecher 22 in Form einer Textaussage, z.B. "Hindernis im Bereich der linken Fahrerseite" ausgegeben wird. Hierzu ist zwischen Steuereinrichtung 20 und Lautsprecher 22 eine sprachausgabeeinrichtung 42 vorgesehen.

Fig. 6 zeigt ein optisches Anzeigemittel in Form einer stilisierten Anzeige 50 gemäß einer vierten Ausführungsform der Erfindung. Die stilisierte Anzeige 50 umfaßt ein stilisiertes Auge 52, das von vier Richtungspfeilen umgeben ist, nämlich einem oberen 54, einem rechten 55, einem unteren 56 und einem linken 57 Richtungspfeil. Die Richtungspfeile 54, 55, 56, 57 geben die Lage eines erfaßten Hindernisses relativ zum Kraftfahrzeug 10 an. Bei einem Hindernis im vorderen Bereich des Kraftfahrzeugs 10 leuchtet oder blinkt der obere Richtungspfeil 54, bei einem Hindernis rechts von dem Kraftfahrzeug 10 leuchtet oder blinkt der rechte Richtungspfeil 55, bei einem Hindernis im Bereich hinter dem Kraftfahrzeug 10 leuchtet oder blinkt der untere Richtungspfeil 55 und bei einem Hindernis links von dem Kraftfahrzeug 10 leuchtet oder blinkt der linke Richtungspfeil. Die stilisierte Anzeige 50 wird vorzugsweise in einem oder in beiden Außenspiegeln 26, 28, 30, 32 angeordnet. Alternativ oder zusätzlich kann die stilisierte Anzeige 50 auch in dem Monitor 18 dargestellt werden.

Gemäß der stilisierten Anzeige 50 wird die Richtung bzw. die Lage des erfaßten Hindernisses relativ zum Kraftfahrzeug lediglich grob in vor, seitlich links oder recht und hinter dem Kraftfahrzeug aufgelöst. Die Genauigkeit bzw. die Auflösung der Anzeige läßt sich z. B. dadurch steigern, daß nach Art einer Windrose (nicht dargestellt) die Richtung und die Lage eines Hindernisses angezeigt wird.

Es sind auch Kombinationen der verschiedenen Ausführungsformen untereinander möglich.

### Bezugszeichenliste:

- 1 - 8: Sensoren
- 10: Lastzug
- 12: Rückfahrkamera
- 14: linke Außenspiegelanordnung
- 16: rechte Außenspiegelanordnung
- 18: Monitor
- 20: Steuereinrichtung
- 22: Lautsprecher
- 24: Schalter
- 26: linker Hauptspiegel
- 28: rechter Hauptspiegel
- 30: linker Weitwinkelspiegel
- 32: rechter Weitwinkelspiegel
- 34: erstes LED-Element
- 36: zweites LED-Element
- 38: drittes LED-Element
- 40.: Markierungselement
- 42: Sprachausgabeeinrichtung
- 50: stilisierte Anzeige
- 52: stilisiertes Auge
- 54: oberer Richtungspfeil
- 55: rechter Richtungspfeil
- 56: unterer Richtungspfeil
- 57: linker Richtungspfeil

## Patentansprüche

1. Warneinrichtung in Kraftfahrzeugen (10), mit
einer Mehrzahl von Anzeigeeinrichtungen in Form von Spiegeln (14, 16),
einer Mehrzahl von Sensoren (1 bis 8), die an einem vorderen und an einem seitlichen und/oder hinteren Bereich des Kraftfahrzeugs (10) angeordnet sind, zur Erfassung von Hindernissen, die vor und seitlich und/oder hinter dem Kraftfahrzeug (10) auftauchen und in wenigstens einer der Spiegel (14, 16) sichtbar sind, und
einer Steuereinrichtung (20), die mit den Spiegeln (14, 16) und den Sensoren (1 bis 8) verbunden ist,
wobei,
durch die Steuereinrichtung (20) ein Hinweissignal erzeugbar ist, das auf wenigstens einen der Spiegel (14, 16) hinweist, mittels dem die Lage eines Hindernisses, das durch wenigstens einen der Sensoren (1 bis 8) erfaßt wird, erkennbar ist.

2. Warneinrichtung nach Anspruch 1, **dadurch gekennzeichnet, daß** die Spiegel Außenspiegel an dem Kraftfahrzeug (14, 16), umfassen.

3. Warneinrichtung nach Anspruch 1 oder 2, **gekennzeichnet durch** ein Mittel (34, 36, 38, 40) zur optischen Anzeige des **durch** die Steuereinrichtung (20) erzeugbaren Hinweissignals.

4. Warneinrichtung nach Anspruch 3, **dadurch gekennzeichnet, daß** eine Mehrzahl von Anzeigemittel (34, 36, 38, 40) vorgesehen sind und daß jeweils eines der Anzeigemittel (34, 36, 38, 40) einer der Anzeigeeinrichtungen (14, 16, 18) räumlich zugeordnet ist.

5. Warneinrichtung nach Anspruch 3 oder 4, **dadurch gekennzeichnet, daß** das optische Anzeigemittel (34, 36, 38, 40, 50) die Lage des erfaßten Hindernisses relativ zum Kraftfahrzeug (10) anzeigt.

6. Warneinrichtung nach Anspruch 4 oder 5, **dadurch gekennzeichnet, daß** die optischen Anzeigemittel (34, 36, 38, 40, 50) Mittel zur Erzeugung eines Blinksignales umfassen.

7. Warneinrichtung nach einem der Ansprüche 3 bis 6, **dadurch gekennzeichnet, daß** die Anzeigemittel zur optischen Anzeige des Hinweissignals Mittel (40) zur Erzeugung eines Hinweistextes umfassen.

8. Warneinrichtung nach einem der vorhergehenden Ansprüche, **gekennzeichnet durch** ein akustisches Anzeigemittel (22) zur Ausgabe eines akustischen Warnsignals bei Erfassung eines Hindernisses **durch** die Sensoren (1 bis 8).

9. Warneinrichtung nach Anspruch 8, **gekennzeichnet durch** eine Sprachausgabeeinrichtung (42), die mit der Steuereinrichtung (20) und dem akustischen Anzeigemittel (22) verbunden ist, zur Ausgabe der Lage eines **durch** die Sensoren (1 bis 8) erfassten Hindernisses in Form von Sprache über das akustische Anzeigemittel (22).

10. Warneinrichtung nach einem der vorhergehenden Ansprüche, **dadurch gekennzeichnet, daß** die Sensoren (1 bis 8) Ultraschallsensoren, auf elektromagnetische Strahlung ansprechende Sensoren, und/oder Kameras umfassen.

## Claims

1. Alarm device in automotive vehicles (10), comprising a plurality of display means having the form of mirrors (14, 16),
a plurality of sensors (1 to 8) disposed on a front and lateral and/or rear area of the automotive vehicle (10), for detecting obstacles appearing in front and laterally of the automotive vehicle (10) and visible in at least one of the mirrors (14, 16), and
control means (20) connected with the mirrors (14, 16) and the sensors (1 to 8),
wherein
through the intermediary of the control means (20) an indicator signal may be generated which indicates at least one of the mirrors (14, 16), allowing to determine the position of an obstacle detected by at least one of the sensors (1 to 8).

2. Alarm device in accordance with claim 1 or 2, **characterized in that** the mirrors include external mirrors on the automotive vehicle (14, 16).

3. Alarm device in accordance with claim 1 or 2, **characterized by** means (34, 36, 38, 40) for visually displaying the indicator signal which may be generated by the control means (20).

4. Alarm device in accordance with claim 3, **characterized in that** a plurality of display means (34, 36, 38, 40) are provided, and **in that** each of the display means (34, 36, 38, 40) is spatially associated to one of the display devices (14, 16, 18).

5. Alarm device in accordance with claim 3 or 4,
**characterized in that** the visual display means (34, 36, 38, 40, 50) indicates the position of the detected obstacle relative to the automotive vehicle (10).

6. Alarm device in accordance with claim 4 or 5, **characterized in that** the visual display means (34, 36, 38, 40, 50) include means for generating an intermittent signal.

7. Alarm device in accordance with any one of claims 3 to 6, **characterized in that** the display means for visually displaying the indicator signal comprise means (40) for generating an indicator text.

8. Alarm device in accordance with any one of the preceding claims, **characterized by** acoustic indicator means (22) for outputting an acoustic alarm signal upon detection of an obstacles by the sensors (1 to 8) .

9. Alarm device in accordance with claim 8, **characterized by** speech output means (42) connected with the control means (20) and the acoustic indicator means (22), for outputting the position of an obstacle detected by the sensors (1 to 8) in the form of speech via the acoustic indicator means (22).

10. Alarm device in accordance with any one of the preceding claims, **characterized in that** the sensors (1 to 8)include ultrasonic sensors, sensors responding to electromagnetic radiation, and/or cameras.

## Revendications

1. Dispositif d'alarme dans des véhicules automobiles (10), comprenant :
une pluralité de dispositifs d'affichage ayant la forme de miroirs (14, 16),
une pluralité de capteurs (1 à 8) disposés sur une zone avant et/ou une zone latérale et/ou une zone arrière du véhicule automobile (10) pour détecter des obstacles, qui surgissent à l'avant et sur le côté et/ou à l'arrière du véhicule automobile (10) et sont visibles en au moins l'un des miroirs (14, 16), et
un dispositif de commande (20) relié aux miroirs (14, 16) et aux capteurs (1 à 8), où
au moyen du dispositif de commande (20) peut être produit un signal de renvoi, renvoyant à au moins l'un des miroirs (14, 16), au moyen duquel la position d'un obstacle, détectée par au moins l'un des capteurs (1 à 8), est identifiable.

2. Dispositif d'alarme selon la revendication 1, **caractérisé en ce que** les miroirs comprennent des rétroviseurs extérieurs, montés sur le véhicule automobile (14, 16).

3. Dispositif d'alarme selon la revendication 1 ou 2, **caractérisé par** un moyen (34, 36, 38, 40) d'affichage optique du signal de renvoi, pouvant être produit par le dispositif de commande (20).

4. Dispositif d'alarme selon la revendication 3, **caractérisé en ce qu'**une pluralité de moyens d'affichage (34, 36, 38, 40) sont prévus, et **en ce que**, chaque fois, l'un des moyens d'affichage (34, 36, 38, 40) est associé spatialement à l'un des dispositifs d'affichage (14, 16, 18).

5. Dispositif d'alarme selon la revendication 3 ou 4, **caractérisé en ce que** les moyens d'affichage optique (34, 36, 38, 40, 50) affichent la position de l'obstacle identifié, par rapport au véhicule (10).

6. Dispositif d'alarme selon la revendication 4 ou 5, **caractérisé en ce que** les moyens d'affichage optique (34, 36, 38, 40, 50) comprennent des moyens pour générer un signal clignotant.

7. Dispositif d'alarme selon l'une des revendications 3 à 6, **caractérisé en ce que** les moyens d'affichage, servant à l'affichage optique du signal de renvoi, comprennent des moyens (40) pour produire un texte de renvoi.

8. Dispositif d'alarme selon l'une des revendications précédentes, **caractérisé par** un moyen d'affichage (22) optique, devant produire un signal d'alarme acoustique en cas de détection d'un obstacle par les capteurs (1 à 8).

9. Dispositif d'alarme selon la revendication 8, **caractérisé par** un dispositif d'indication vocale (42), relié au dispositif de commande (20) et au moyen d'affichage (22) acoustique, pour fournir la position d'un obstacle détecté par les capteurs (1 à 8), sous la forme d'une énonciation vocale, par l'intermédiaire du moyen d'affichage acoustique (22).

10. Dispositif d'alarme selon l'une des revendications précédentes, **caractérisé en ce que** les capteurs (1 à 8) comprennent des capteurs à ultrasons, des capteurs réagissant à un rayonnement électromagnétique et/ou des caméras.
